# FASCICULE DE BREVET EUROPEEN

(11) **EP 4 295 019 B1**
(45) Date de publication et mention de la délivrance du brevet: **10.06.2026**
(21) Numéro de dépôt: 22707806.0
(22) Date de dépôt: 09.02.2022
(51) Int. Cl.: F01M 11/08, B01D 39/20, B01D 45/14, B04B 5/08, B04B 7/08, F01D 25/18, F01M 13/04

(54) **ROTOR POUR UN DEGAZEUR CENTRIFUGE DE TURBOMACHINE**
ROTOR FÜR ZENTRIFUGALENTLÜFTER EINER TURBOMASCHINE
ROTOR FOR A TURBOMACHINE CENTRIFUGAL BREATHER

(30) Priorité: 19.02.2021 FR 2101643
(43) Date de publication de la demande: 27.12.2023
(73) Titulaire: Safran Helicopter Engines, 64510 Bordes (FR)
(72) Inventeur: MARSAUDON, Mathieu Jean-Baptiste, 77550 MOISSY-CRAMAYEL (FR); BERTEAUX, Olivier Philippe David, 77550 MOISSY-CRAMAYEL (FR)
(74) Mandataire: Gevers & Orès
(86) Numéro de dépôt international: PCT/FR2022/050233
(87) Numéro de publication internationale: WO 2022/175616

(56) Documents cités:
- FR-A1- 3 071 418
- FR-A1- 3 083 570
- FR-A1- 3 094 524
- US-A1- 2016 298 751
- US-A1- 2017 334 023

## Description

### Domaine technique de l'invention

L'invention concerne un rotor pour un dégazeur centrifuge de turbomachine ainsi qu'un dégazeur comportant un tel rotor. L'invention concerne en outre un procédé de fabrication de ce rotor.

### Arrière-plan technique

Les turbomachines sont des systèmes complexes qui mettent en œuvre un certain nombre d'ensembles tournants (turbines, compresseur, etc.) qui doivent être équipés de dispositifs d'étanchéité. Ces dispositifs d'étanchéité sont en général réalisés par des labyrinthes d'air pressurisé aménagés au voisinage des ensembles tournants. Pour ce faire, un air est prélevé directement dans la veine d'air de la turbomachine. Cet air transite ensuite dans la turbomachine par les différents labyrinthes prévus à cet effet, puis est évacué vers l'extérieur de la turbomachine pour limiter la montée en pression des autres zones de la turbomachine, notamment le réducteur, la boite d'accessoires, etc. Cet air ayant transité par différentes zones de la turbomachine est chargé en huile utilisée pour le refroidissement et la lubrification des paliers et des pignons des ensembles tournants. Pour éviter le rejet d'air chargé d'huile, atténuer l'impact écologique des turbomachines, réduire la consommation d'huile et limiter les opérations de remplissage des réserves d'huile, il est important de prévoir des dégazeurs qui permettent de séparer l'huile de l'air avant d'évacuer l'air vers l'extérieur de la turbomachine. Un tel dégazeur est en général agencé et entrainé par une prise de puissance mécanique au niveau de la boite d'accessoires ou du réducteur de la turbomachine.

De manière connue, un tel dégazeur centrifuge comprend une ou plusieurs enceinte(s) de séparation centrifuge du mélange air/huile agencée(s) autour d'un arbre creux et délimitée(s) par une paroi annulaire externe et une paroi annulaire interne. Le dégazeur comprend en outre une entrée axiale d'alimentation de l'enceinte avec le mélange air/huile, et une sortie d'huile périphérique ménagée dans la paroi externe. Ainsi, lors de la mise en rotation du dégazeur, obtenue en général par l'intermédiaire d'un pignon de la boite d'accessoires ou du réducteur, l'huile est naturellement entrainée par force centrifuge vers la sortie d'huile ménagée en périphérie du dégazeur. Une sortie d'air déshuilé est en outre ménagée dans la paroi interne et reliée à l'arbre creux, ce qui permet d'évacuer l'air vers l'extérieur.

Certains dégazeurs, tels que celui décrit dans la demande WO-A1-2011/004023, comprennent en outre des filtres agencés dans l'enceinte du dégazeur pour améliorer le captage des gouttes d'huile et favoriser ainsi le déshuilage du mélange. En effet, les filtres augmentent la surface de contact disponible et améliorent donc la probabilité qu'une goutte d'huile transportée par le flux de mélange soit accrochée à une paroi. Ces filtres sont en général formés d'une mousse métallique, telle qu'une mousse commercialisée sous la dénomination Retimet^{®}.

Cependant les performances des dégazeurs connus sont en général handicapées par des pertes de charge internes qui sont dues à deux causes en particulier, les formes de la veine, comprenant l'enceinte de centrifugation, empruntée par le flux d'air en cours de déshuilage, et la présence de la mousse métallique.

En ce qui concerne les formes internes au dégazeur délimitant la veine empruntée par le flux d'air, le procédé de fabrication peut alors être limitant quant au potentiel de géométrie optimale à réaliser.

En ce qui concerne, la présence de mousse métallique, les pertes de charge sont dues au fait qu'à haute vitesse (par exemple pour des vitesses de l'ordre de 6000 à 25 000 tours/min), la surface frontale constituée par la mousse métallique agit comme un mur et le degré de pénétration des particules d'air dans la mousse est faible.

Pour répondre à ces problèmes et pour optimiser les performances de déshuilage tout en limitant les pertes de charge au travers du dégazeur, la Demanderesse a déjà proposé dans les demandes FR3071418 A1, WO-A1-2020/008153 et WO-A1-2020/008156 de remplacer le filtre par une structure annulaire en treillis qui est réalisée par fabrication additive.

En pratique, la structure en treillis est réalisée puis est montée et fixée sur l'arbre grâce à un écrou (on parle alors d'une cartouche rapportée sur l'arbre). L'écrou est vissé sur un filetage externe de l'arbre et vient serrer axialement la structure en treillis contre un épaulement de l'arbre. L'écrou peut comprendre des moyens d'immobilisation en rotation de la structure en treillis vis-à-vis de l'arbre.

La fixation de la structure en treillis sur l'arbre est relativement encombrante car l'écrou et le filetage de l'arbre occupe un espace annulaire relativement encombrant en direction axiale et radiale, qui ne peut pas être occupé par la structure en treillis et qui limite donc les dimensions de cette structure et donc les performances du dégazeur. Par ailleurs, le filetage complexifie la fabrication de l'arbre et la fixation de la structure en treillis par écrou a un impact sur la durée de fabrication et d'assemblage du dégazeur.

La présente invention propose une solution simple, efficace et économique à au moins une partie de ces problèmes.

### Résumé de l'invention

A cet effet, l'invention concerne un rotor pour un dégazeur centrifuge d'un mélange air/huile de turbomachine, ce rotor comportant :
- un arbre creux s'étendant le long d'un axe X et définissant une cavité interne de circulation d'air après séparation dudit mélange,
- un pignon de mise en rotation de l'arbre creux, ce pignon s'étendant autour de l'axe et étant formé d'une seule pièce et dans un premier matériau avec au moins une première partie de l'arbre creux, et
- une structure annulaire, de préférence en treillis, s'étendant autour de l'axe et solidaire en rotation de l'arbre, cette structure étant réalisée dans un second matériau différent du premier matériau et étant configurée pour assurer une séparation centrifuge dudit mélange,
caractérisé en ce que ladite structure est rendue solidaire de l'arbre par la fabrication additive de cette structure directement sur au moins une surface annulaire du pignon qui forme au moins une surface annulaire de support pour cette fabrication additive.

L'invention permet de simplifier le procédé de fabrication du rotor en supprimant l'étape de la technique antérieure consistant à visser un écrou sur l'arbre. En effet, la fixation de la structure annulaire sur l'arbre résulte automatiquement de son mode de fabrication, par fabrication additive, directement sur le pignon. Il n'est donc pas nécessaire de prévoir d'éléments de fixation particuliers ni d'étape de fixation particulière, ce qui permet de simplifier et de réduire la durée de fabrication du rotor. Par ailleurs, la suppression de l'écrou permet de supprimer le filetage de l'arbre de la technique antérieure et permet d'optimiser l'espace disponible pour la structure annulaire qui peut donc être surdimensionnée par rapport à celles de la technique antérieure. Les performances du dégazeur s'en trouvent ainsi améliorées. Enfin, le fait de conserver deux matériaux différents pour la structure annulaire d'une part, et pour le pignon et au moins une partie de l'arbre d'autre part, permet de choisir ces matériaux en fonction des exigences de tenue mécanique et chimique et de durée de vie des différentes parties du rotor.

Le rotor selon l'invention peut comprendre une ou plusieurs des caractéristiques suivantes, prises isolément les unes des autres ou en combinaison les unes avec les autres :
- le pignon est situé à une extrémité longitudinale de ladite première partie dudit arbre et ladite au moins une surface annulaire est situé sur un côté du pignon opposé à cette première partie ;
- ladite au moins une surface annulaire est perpendiculaire audit axe ;
- ladite structure est réalisée par fabrication additive sur une unique surface annulaire du pignon, cette surface étant plane et s'étendant depuis la périphérie interne du pignon jusqu'à la périphérie externe du pignon ;
- le pignon a une périphérie externe comportant une denture, une périphérie interne reliée à l'arbre, et un voile annulaire intermédiaire s'étendant entre ses périphéries interne et externe et présentant une épaisseur mesurée le long dudit axe qui est inférieure aux épaisseurs desdites périphéries mesurées le long du même axe ;
- la structure annulaire est réalisée d'une seule pièce et dans ledit second matériau avec au moins une seconde partie dudit arbre ;
- le premier matériau est choisi parmi un acier durcissable par traitement thermique de cémentation ou nitruration, par exemple du type E16NCD13 et E32CDV13 ; ces nuances d'acier permettent un durcissement superficiel par traitement thermique (cémentation ou nitruration) ; le choix de cette nuance permet d'obtenir les propriétés mécaniques nécessaires au bon comportement de l'engrènement en fonctionnement ;
- le second matériau est un acier inoxydable, par exemple du type 17-4 **PH** ; dans la mesure où la structure peut être en contact avec l'air ambiant à l'extérieur de la turbomachine, ce matériau permet d'éviter une oxydation et tout risque d'endommagement.

La présente invention concerne également un dégazeur centrifuge d'un mélange air/huile de turbomachine, comprenant un rotor tel que décrit ci-dessus.

La présente invention concerne également un procédé de fabrication d'un rotor tel que décrit ci-dessus.

Le procédé comprend les étapes de :
a) fabrication d'une seule pièce et dans un premier matériau du pignon et d'au moins une partie de l'arbre creux,
b) fabrication additive, par exemple sur lits de poudre, de la structure annulaire dans un second matériau directement sur au moins une surface annulaire du pignon.

Le procédé selon l'invention permet d'obtenir le rotor tel que décrit ci-dessus, pour un dégazeur centrifuge d'un mélange air/huile de turbomachine. Ce rotor comporte :
- un arbre creux s'étendant le long d'un axe X et définissant une cavité interne de circulation d'air après séparation dudit mélange,
- un pignon de mise en rotation de l'arbre creux, ce pignon s'étendant autour de l'axe et étant formé d'une seule pièce et dans un premier matériau avec au moins une première partie de l'arbre creux, et
- une structure annulaire, de préférence en treillis, s'étendant autour de l'axe et solidaire en rotation de l'arbre, cette structure étant réalisée dans un second matériau différent du premier matériau et étant configurée pour assurer une séparation centrifuge dudit mélange,
ladite structure annulaire est rendue solidaire de l'arbre par la fabrication additive de cette structure directement sur au moins une surface annulaire du pignon qui forme au moins une surface annulaire de support pour cette fabrication additive.

Le rotor obtenu par le procédé de fabrication peut comprendre ainsi au moins une ou plusieurs des caractéristiques associées au rotor, telles que décrites ci-dessus. Ces caractéristiques peuvent être prises isolément les unes des autres ou en combinaison les unes avec les autres.

Le pignon peut être situé à une extrémité longitudinale de ladite première partie dudit arbre et ladite au moins une surface annulaire est situé sur un côté du pignon opposé à cette première partie.

Le pignon peut avoir une périphérie externe comportant une denture, une périphérie interne reliée à l'arbre, et un voile annulaire intermédiaire s'étendant entre ses périphéries interne et externe. Ce voile annulaire peut présenter une épaisseur mesurée le long dudit axe qui est inférieure aux épaisseurs desdites périphéries mesurées le long du même axe.

De préférence, l'étape a) comprend l'usinage d'un bloc en alliage métallique, et également de préférence le traitement de ce bloc après usinage par cémentation ou nitruration.

Avantageusement, l'étape b) comprend la fabrication simultanée de la structure annulaire et d'une seconde partie dudit arbre.

Cette seconde partie dudit arbre peut être située à la périphérie interne de la structure annulaire et s'étend vers le haut du pignon depuis sa surface annulaire et dans le prolongement de la première partie dudit arbre.

Ladite surface annulaire du pignon peut être unique.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 montre une vue schématique en perspective d'un dégazeur centrifuge pour une turbomachine, coupé selon un plan de symétrie ;
[Fig.2] la figure 2 montre une vue schématique partielle en perspective et coupée selon un plan de symétrie d'une enceinte de centrifugation du dégazeur de la figure 1 ;
[Fig.3] la figure 3 montre une vue en perspective schématique d'une portion d'une structure en treillis de l'enceinte de centrifugation de la figure 2 ;
[Fig.4] la figure 4 montre une vue en perspective schématique d'un procédé de fabrication, et en particulier d'assemblage, d'un rotor de dégazeur centrifuge, selon la technique antérieure à la présente invention ;
[Fig.5] la figure 5 montre une vue en coupe schématique et partielle d'un pignon sur lequel est réalisé par fabrication additive une structure annulaire en treillis, et illustre un procédé de fabrication d'un rotor selon l'invention ;
[Fig.6] la figure 6 montre une vue en perspective schématique d'un pignon et d'une partie d'un arbre, pour la mise en œuvre du procédé selon l'invention ; et
[Fig.7] la figure 7 montre une autre vue en perspective schématique du pignon et de la partie d'arbre de la figure 6.

### Description détaillée de l'invention

Sur les figures, les échelles et les proportions ne sont pas strictement respectées et ce, à des fins d'illustration et de clarté.

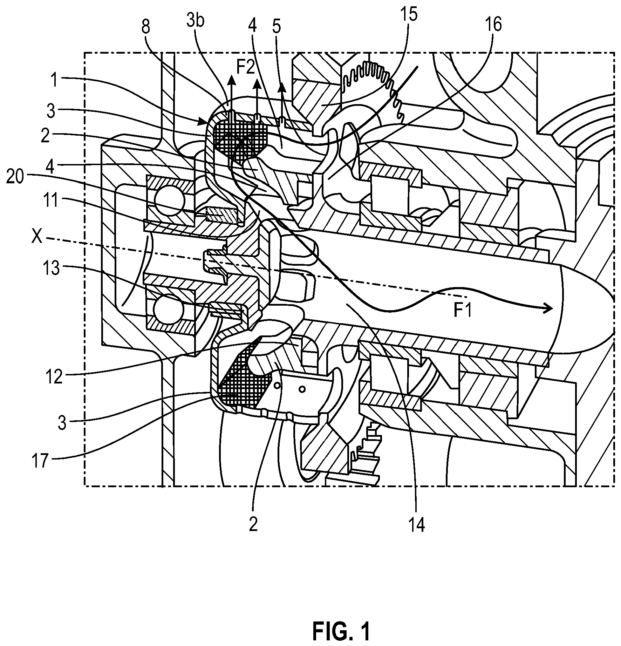

Un dégazeur centrifuge pour une turbomachine en particulier d'aéronef est représenté sur la figure 1.

Ce dégazeur comprend notamment une pièce 1 mobile en rotation autour d'un axe longitudinal X.

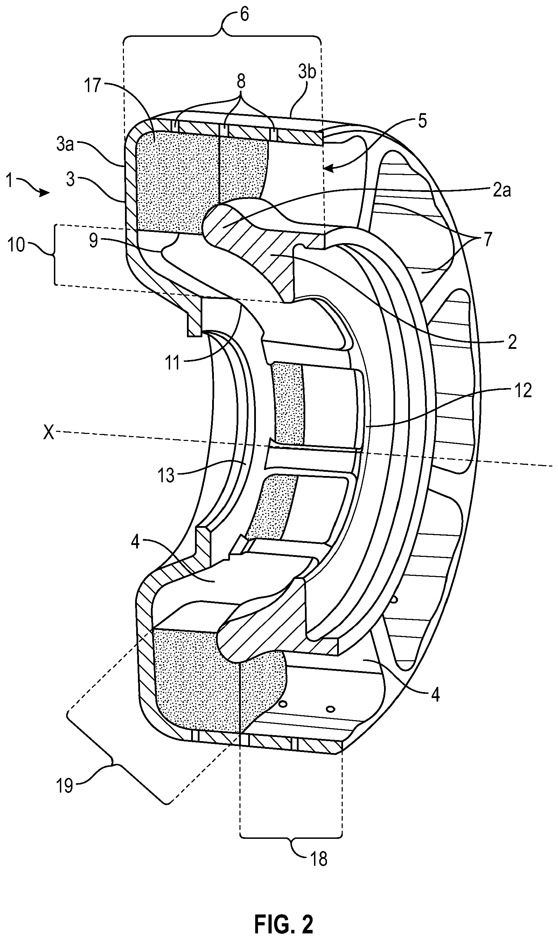

Comme cela est montré plus en détail sur la figure 2, la pièce 1 comporte une partie structurelle qui comprend une première coque 2 entourée d'une deuxième coque 3. L'espace entre les deux coques 2, 3, forme une veine 4 de révolution autour de l'axe X, destinée à faire circuler un mélange d'air et d'huile à séparer.

La veine 4 comporte une entrée axiale 5 destinée à l'entrée du mélange d'air et d'huile à séparer. Cette entrée axiale 5 correspond à une première extrémité d'une première partie 6 de la veine 4 qui s'étend essentiellement de manière axiale, en vue de centrifuger le mélange. La première partie de veine 6, qui s'étend axialement, fait office d'enceinte de centrifugation car c'est là que la force centrifuge s'exerce avec le plus de force sur le mélange air/huile. Elle est donc appelée enceinte de centrifugation 6 dans la suite de la description.

La veine 4 comprend ici en outre une pluralité de compartiments répartis circonférentiellement autour de l'axe X. Les compartiments sont formés par des cloisons longitudinales 7 s'étendant radialement. Avantageusement, ces cloisons longitudinales 7 relient la première 2 et la deuxième coque 3, formant ainsi une liaison qui les solidarise. Chaque compartiment communique avec l'entrée axiale 5 du mélange. Les cloisons axiales 7 forment des ailettes qui entraînent en rotation le mélange entrant dans les compartiments adjacents. A sa deuxième extrémité axiale, l'enceinte de centrifugation 6 est fermée axialement par une portion 3a de la deuxième coque 3, sensiblement perpendiculaire à l'axe X, et comporte une ouverture radiale 9 vers l'axe X entre la première 2 et la deuxième coque 3. La deuxième coque 3 forme une paroi 3b radialement externe de l'enceinte de centrifugation 6 qui est sensiblement annulaire, entre l'entrée 6 et la partie 3a de la deuxième coque qui limite axialement l'enceinte de centrifugation 6 à sa seconde extrémité. L'enceinte de centrifugation 6 comporte une pluralité de sorties radiales 8 d'huile, sous la forme d'orifices traversants ménagés dans la paroi radialement externe 3b et est configurée pour pouvoir évacuer l'huile séparée du mélange par l'effet de la force centrifuge du dégazeur. Chaque compartiment de la veine 4 est relié à une ou plusieurs sortie(s) radiale(s) 8 d'huile.

La première coque 2 forme une paroi radialement interne des compartiments de la veine dans l'enceinte de centrifugation 8. Elle s'arrête axialement avant la portion axiale 3a de la deuxième coque 3, en partant de l'entrée 6 de la veine, pour ménager l'ouverture radiale 9 vers l'intérieur à la seconde extrémité de l'enceinte de centrifugation 6. Sa forme peut être optimisée pour favoriser la séparation de l'huile et pour minimiser les pertes de charge, notamment au niveau du coude formé au niveau de la sortie radiale. Sur l'exemple présenté, la paroi radialement interne 2 est sensiblement annulaire en partant de l'entrée axiale 5 et comporte une extrémité axiale 2a opposée à l'entrée radiale 5 formant un bourrelet ou un plateau circonférentiel arrondi au niveau de la seconde extrémité de l'enceinte de centrifugation 6. Cette forme de l'extrémité axiale 2a de la première coque a tendance à renvoyer le fluide radialement vers l'extérieur au passage du coude formé dans la veine 4 en sortie de l'enceinte de centrifugation 6, de manière à optimiser l'écoulement du flux mélange air/huile.

La veine 4 comporte une deuxième partie 10 qui communique avec l'enceinte de centrifugation 6 par l'ouverture radiale 9 entre la première 2 et la deuxième 3 coques et qui est configurée pour guider le fluide vers une sortie radiale 11 dans un espace cylindrique vide, qui s'étend axialement entre les limites de l'enceinte de centrifugation 6. La première 2 et la deuxième 3 coques forment des colliers 12, 13, qui limitent ledit espace cylindre vide.

Ces colliers 12, 13 sont configurés pour relier la pièce 1 à un arbre creux 14, représenté sur la figure 1, qui entraîne la pièce en rotation. La section de la veine 4 selon un plan longitudinal a une forme coudée optimisée pour guider l'air déshuilé vers la sortie radiale interne 12.

La pièce 1 est utilisée dans un dégazeur qui comprend un pignon 15 de mise en rotation de l'arbre 14 et de la pièce 1. Sur l'exemple présenté, le pignon 15 comprend un voile 16 qui est relié solidairement à l'arbre creux 14 et qui comprend des ouvertures en regard de l'entrée axiale 5 pour le passage du mélange dans les compartiments de la veine 4.

La pièce 1 comporte en outre au moins une structure alvéolaire en treillis 17 logée dans l'enceinte de centrifugation 6.

L'enceinte de centrifugation 6 peut comprendre deux espaces distincts successifs: un espace libre 18 situé en amont par référence à l'écoulement du mélange dans l'enceinte 6, et un espace 19 rempli par la structure 17. L'espace libre 18 est alimenté en mélange par l'ouverture du compartiment sur l'entrée axiale 5 et il débouche dans l'espace 19 rempli par la structure 17. L'espace 19 rempli par la structure 17 débouche dans la deuxième partie 10 de la veine.

Comme indiqué par la flèche F1 sur la figure 1, le mélange air/huile entre donc dans la pièce mobile 1 par les ouvertures du voile 16. Dans l'espace libre 18, les cloisons longitudinales 7 entraînent le mélange en rotation. Au cours du passage du flux F1 dans cette première partie 18 de l'enceinte, une première phase de déshuilage est réalisée par effet de centrifugation. La structure en treillis 17 présente une fonction de captage des gouttes d'huile non extraites au cours de la première phase. Par effet de centrifugation, l'huile est évacuée vers les sorties radiales 8 au travers de la structure 17, comme illustré par les flèches F2. Cette deuxième phase de déshuilage est en outre réalisée dans l'espace 19 occupé par la structure 17 sans pertes de charge notables du fait de l'attaque axiale des gouttes d'huile et de la structure en treillis.

Ensuite, l'air déshuilé ayant traversé la structure 17 dans la veine 4 arrive dans l'arbre creux 14 pour être évacué.

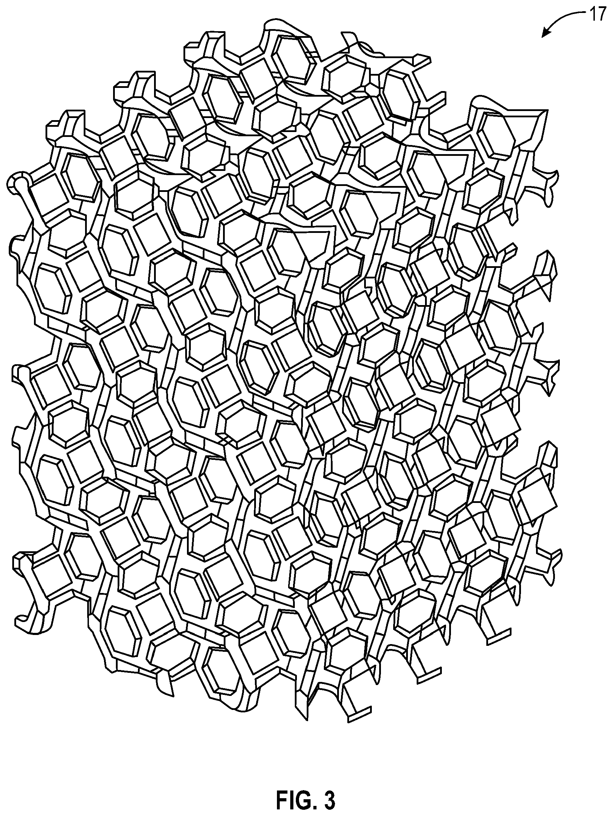

La structure 17 est par exemple formée par la répétition suivant les trois dimensions d'espace d'un motif unique agencé de manière à ce que les vides entre la matière communiquent de façon à organiser des chemins traversant la matière du treillis dans les trois dimensions d'espace, lesdits chemins présentant des coudes et/ou des pincements et/ou des bifurcations. Plusieurs modes de réalisation d'une telle structure ou d'un tel treillis sont envisageable, tels que celui illustré à la figure 3.

Les configurations présentées sur les figures 1 et 2 ne sont pas limitatives. En particulier la structure 17 peut être formée d'une seule pièce avec les coques 2, 3 de façon à ce que la pièce 1 forme un ensemble monobloc.

La pièce 1 est alors avantageusement réalisée par une méthode de fabrication additive, comme cela est prévu dans la demande WO-A1-2019/063458, qui permet de réaliser les formes complexes de l'exemple, notamment en vue de favoriser la séparation des gouttelettes d'huile du mélange tout en minimisant les pertes de charges. La fabrication additive peut se faire de manière connue par un procédé de fusion laser sur lits de poudres métalliques.

Dans la technique actuelle, après fabrication de la pièce 1 et donc de la structure en treillis 17, celle-ci est engagée sur une extrémité de l'arbre 14 et fixée sur celui-ci à l'aide d'un écrou 20 (cf. figure 1).

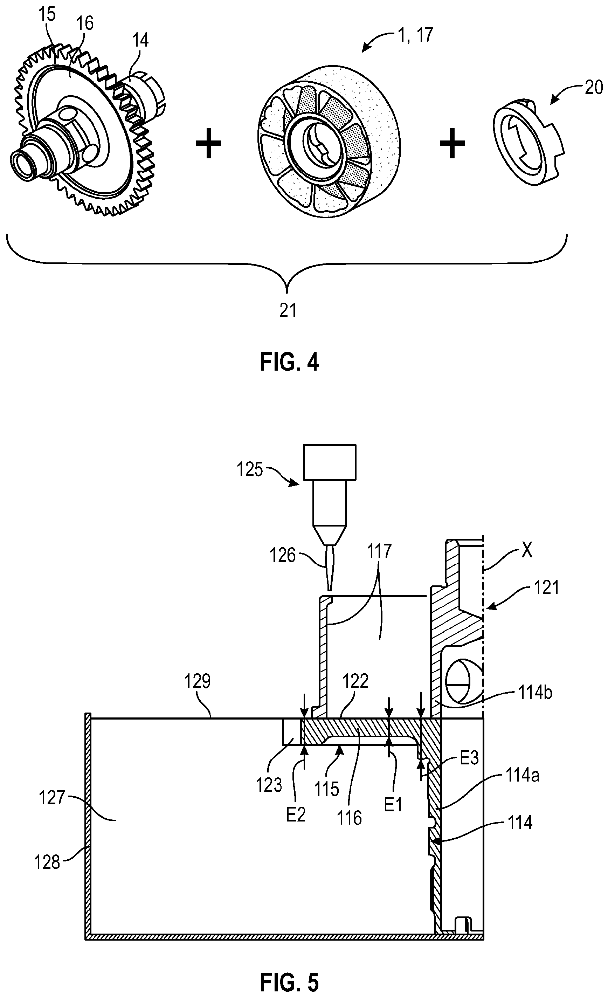

Le rotor 21 du dégazeur est alors formé par l'assemblage des pièces de la figure 4, à savoir l'arbre 14 solidaire du pignon 15, la pièce 1 et sa structure annulaire en treillis 17 qui peuvent former un ensemble monobloc, et l'écrou 20.

L'invention propose un rotor 21 optimisé et en particulier simplifié dans la mesure où il ne comprend pas d'élément de fixation de la structure en treillis 17 sur le pignon 15 ou l'arbre 14.

Les figures 5 à 7 illustrent un mode de réalisation de l'invention, à savoir d'une part un rotor 121 pour un dégazeur centrifuge, et d'autre part un procédé de fabrication de ce rotor 121.

Le rotor 121 comporte pour l'essentiel trois parties à savoir :
- un arbre creux 114 s'étendant le long d'un axe X et définissant une cavité interne de circulation d'air après séparation du mélange air/huile,
- un pignon 115 de mise en rotation de l'arbre creux 114, ce pignon 115 s'étendant autour de l'axe X et étant formé d'une seule pièce et dans un premier matériau avec au moins une première partie 114a de l'arbre creux 114, et
- une structure annulaire en treillis 117 s'étendant autour de l'axe X et solidaire en rotation de l'arbre 114, cette structure 117 étant réalisée dans un second matériau différent du premier matériau et étant configurée pour assurer la séparation centrifuge du mélange, comme évoqué dans ce qui précède.

Selon l'invention, la structure 117 est rendue solidaire de l'arbre 114 par la fabrication additive de cette structure 117 directement sur au moins une surface annulaire 122 du pignon 115 qui forme au moins une surface annulaire de support pour cette fabrication additive (cf. figure 5).

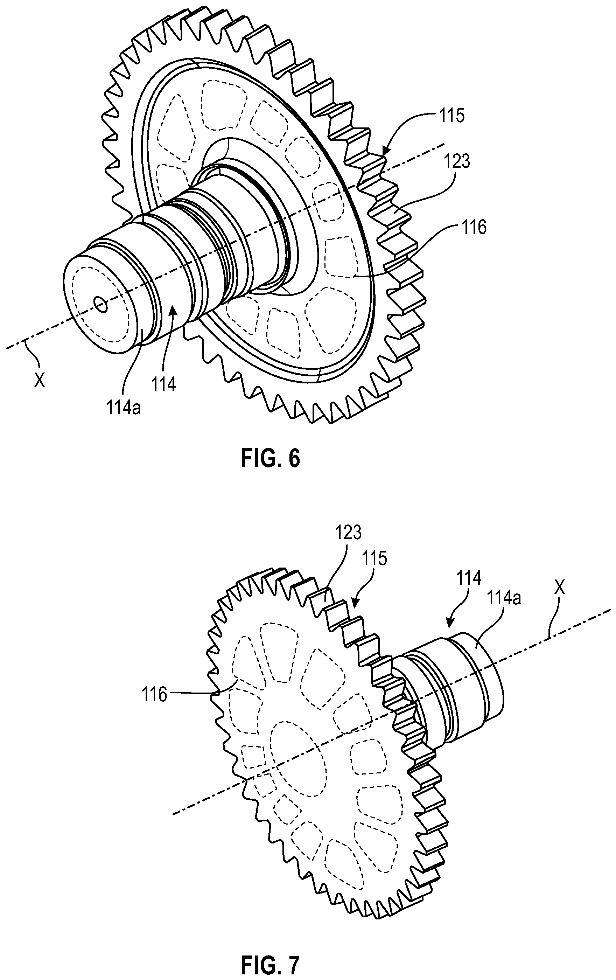

Les figures 6 et 7 montrent une première étape de fabrication du rotor 121, qui consiste à fabriquer d'une seule pièce et dans un premier matériau le pignon 115 et au moins une partie 114a de l'arbre creux 114.

Dans l'exemple représenté, le pignon 115 est situé à une extrémité longitudinale de la première partie 114a de l'arbre 114. La surface annulaire 122 sur laquelle est formée la structure en treillis 117 est située sur un côté du pignon 115 opposé à cette première partie 114a de l'arbre 114.

La surface annulaire 122 est ici perpendiculaire à l'axe X. Cette surface 122 est ici unique (le pignon 115 ne comprend pas d'autres surfaces destinées à recevoir la structure en treillis 117).

Le pignon 115 a une périphérie externe comportant une denture 123, une périphérie interne reliée à l'arbre 114, et un voile annulaire intermédiaire 116 s'étendant entre ses périphéries interne et externe.

Le voile 116 a de préférence une épaisseur E1 mesurée le long de l'axe X qui est inférieure aux épaisseurs E2, E3 des périphéries mesurées le long du même axe X.

Contrairement à l'art antérieur dans lequel la structure annulaire 117 est fabriquée puis est rapportée et fixée sur l'arbre 114 et le pignon 115, la structure 117 est ici fabriquée et solidarisée simultanément sur le pignon 115. Pour cela, la structure 117 est réalisée dans un second matériau par fabrication additive directement sur la surface 122 du pignon 115.

Comme cela est représenté schématiquement à la figure 5, la fabrication additive peut être du type sur lit de poudre. Comme cela est bien connu d'un homme du métier spécialisé dans ce domaine, une tête 125 d'émission d'un faisceau laser 126 balaye la surface d'un lit de poudre 127 qui est contenu dans un bac 128. Le bac 128 comprend plusieurs couches superposées de poudre et la couche supérieure de poudre 129 est balayée par le faisceau laser 126 suivant un motif prédéterminé pour fondre la poudre et générer un cordon de matière fondue.

Le pignon 115 forme un plateau de support de la fabrication additive et comprend une première couche de poudre régulièrement répartie sur sa surface 122. Le plateau 115 est mobile dans le bac 128 le long de l'axe X qui est orienté verticalement.

Une fois la première couche fondue, le pignon 115 est descendu dans le bac 128 et une nouvelle couche de poudre est répartie sur le pignon 115 et la couche déjà fondue. Le laser 126 est à nouveau utilisé pour fondre cette nouvelle couche et ce processus est répété autant de fois que nécessaire jusqu'à ce que la structure annulaire 117 soit entièrement formée par empilement de cordons de matière fondue les uns sur les autres le long de l'axe X.

La figure 5 permet de constater qu'une partie supérieure 114b de l'arbre 114 est réalisée simultanément à la structure annulaire 117 par fabrication additive. Cette seconde partie 114b est située à la périphérie interne de la structure 117 et s'étend vers le haut du pignon 115 depuis sa surface 122 et dans le prolongement de la première partie 114a de l'arbre 114 située sous le pignon 115 et dans le bac 128.

Le pignon 115 et la partie 114a de l'arbre sont de préférence obtenus par usinage d'un bloc en alliage métallique, préalablement à la fabrication additive. Le matériau du pignon 115 et de la partie 114a de l'arbre 1114 est de préférence choisi parmi E16NCD13 et E32CDV13. Ce matériau est de préférence nitruré ou cémenté de façon à rendre sa surface externe plus dure. Le durcissement de la surface externe du pignon 115 et en particulier de sa denture 123 est en effet important pour optimiser sa durée de vie.

Le matériau de la structure en treillis 117 est de préférence un acier inoxydable, par exemple du type 17-4 PH. Contrairement à l'aluminium par exemple, un acier se prête bien à la fusion laser et permet de réaliser des structures fines sans risque d'anomalie de fusion.

A ce jour, il n'existe pas de matériau de fabrication additive qui garantit des propriétés mécaniques de tenue en fatigue suffisante. Les matériaux de fabrication additive ne peuvent donc pas être utilisés pour réaliser le pignon 115 et sa denture 123. Il est donc important que le pignon 115 puisse être réalisé dans un matériau différent de celui utilisé pour la fabrication additive, et la solution a été trouvée de réaliser ce pignon par usinage d'un bloc de matière, comme évoqué dans ce qui précède.

Certaines opérations de finition ou d'usinage du pignon 115 peuvent être réalisées après la fabrication additive de la structure en treillis 117. C'est notamment le cas du perçage du pignon 115 et de l'arbre 114 le long de l'axe X pour réaliser la cavité interne de l'arbre, qui est représentée en traits pointillés aux figures 6 et 7. C'est également le cas des ouvertures du voile 116 du pignon 115 qui sont représentées en traits pointillés dans ces figures. La réalisation de ces perçages et ouvertures après la fabrication additive permet d'avoir une bonne continuité de matière et de faciliter le support des couches et de la poudre lors de la fabrication additive. On peut également imaginer reprendre les portées des roulements de guidage de l'arbre 114 après la fabrication additive, et rectifier la denture 123 du pignon 115 après cette fabrication additive, pour corriger toute déformation éventuelle et assurer une parfaite coaxialité des différentes parties du rotor 121.

L'invention permet ainsi de créer une liaison robuste non démontable entre la structure en treillis 117 et le pignon 115, et ainsi de maximiser le volume des alvéoles de cette structure. La fabrication additive de la structure 117 permet par exemple d'obtenir des alvéoles ou des brins de treillis de dimensions faibles, par exemple comprises entre 0,4 mm et 0,7mm de diamètre.

## Revendications

1. Rotor (121) pour un dégazeur centrifuge d'un mélange air/huile de turbomachine, ce rotor comportant :
- un arbre creux (114) s'étendant le long d'un axe (X) et définissant une cavité interne de circulation d'air après séparation dudit mélange,
- un pignon (115) de mise en rotation de l'arbre creux (114), ce pignon (115) s'étendant autour de l'axe (X) et étant formé d'une seule pièce et dans un premier matériau avec au moins une première partie (114a) de l'arbre creux (114), et
- une structure annulaire (117), de préférence en treillis, s'étendant autour de l'axe (X) et solidaire en rotation de l'arbre (114), cette structure (117) étant réalisée dans un second matériau différent du premier matériau et étant configurée pour assurer une séparation centrifuge dudit mélange,
**caractérisé en ce que** ladite structure (117) est rendue solidaire de l'arbre (114) par la fabrication additive de cette structure directement sur au moins une surface annulaire (122) du pignon (115) qui forme au moins une surface annulaire de support pour cette fabrication additive.

2. Rotor (121) selon la revendication 1, dans lequel le pignon (115) est situé à une extrémité longitudinale de ladite première partie (114a) dudit arbre (114) et ladite au moins une surface annulaire (122) est située sur un côté du pignon (115) opposé à cette première partie (114a).

3. Rotor (121) selon la revendication 1 ou 2, dans lequel ladite au moins une surface annulaire (122) est perpendiculaire audit axe (X).

4. Rotor (121) selon l'une des revendications précédentes, dans lequel ladite structure (117) est réalisée par fabrication additive sur une unique surface annulaire (122) du pignon (115), cette surface (122) étant plane et s'étendant depuis la périphérie interne du pignon (115) jusqu'à la périphérie externe du pignon (115).

5. Rotor (121) selon l'une des revendications précédentes, dans lequel le pignon (115) a une périphérie externe comportant une denture (123), une périphérie interne reliée à l'arbre (114), et un voile annulaire intermédiaire (116) s'étendant entre ses périphéries interne et externe et présentant une épaisseur (E1) mesurée le long dudit axe (X) qui est inférieure aux épaisseurs (E2, E3) desdites périphéries mesurées le long du même axe (X).

6. Rotor (121) selon l'une des revendications précédentes, dans lequel la structure annulaire (117) est réalisée d'une seule pièce et dans ledit second matériau avec au moins une seconde partie (114b) dudit arbre (114).

7. Rotor (121) selon l'une des revendications précédentes, dans lequel le premier matériau est choisi parmi un acier durcissable par traitement thermique de cémentation ou nitruration, par exemple du type E16NCD13 et E32CDV13.

8. Rotor (121) selon l'une des revendications précédentes, dans lequel le second matériau est un acier inoxydable, par exemple du type 17-4 PH.

9. Dégazeur centrifuge d'un mélange air/huile de turbomachine, comprenant un rotor (121) selon l'une des revendications précédentes.

10. Procédé de fabrication d'un rotor selon l'une des revendications 1 à 8, **caractérisé en ce qu'**il comprend les étapes de :
a) fabrication d'une seule pièce et dans un premier matériau du pignon (115) et d'au moins une partie (114a) de l'arbre creux (114),
b) fabrication additive, par exemple sur lits de poudre, de la structure annulaire (117) dans un second matériau directement sur au moins une surface annulaire (122) du pignon (115).

11. Procédé selon la revendication précédente, dans lequel le pignon (115) est situé à une extrémité longitudinale de ladite première partie (114a) dudit arbre (114) et ladite au moins une surface annulaire (122) est située sur un côté du pignon (115) opposé à cette première partie (114a).

12. Procédé selon la revendication 10 ou 11, dans lequel le pignon (115) a une périphérie externe comportant une denture (123), une périphérie interne reliée à l'arbre (114), et un voile annulaire intermédiaire (116) s'étendant entre ses périphéries interne et externe et présentant une épaisseur (E1) mesurée le long dudit axe (X) qui est inférieure aux épaisseurs (E2, E3) desdites périphéries mesurées le long du même axe (X).

13. Procédé selon l'une des revendications 10 à 11, dans lequel l'étape a) comprend l'usinage d'un bloc en alliage métallique, et également de préférence le traitement de ce bloc après usinage par cémentation ou nitruration.

14. Procédé selon l'une des revendications 10 à 13, dans lequel l'étape b) comprend la fabrication simultanée de la structure annulaire (117) et d'une seconde partie (114b) dudit arbre (114).

15. Procédé selon la revendication précédente, dans lequel la seconde partie (114b) est située à la périphérie interne de la structure (117) et s'étend vers le haut du pignon (115) depuis sa surface (122) et dans le prolongement de la première partie (114a) de l'arbre (114).

## Patentansprüche

1. Rotor (121) für einen Zentrifugalentlüfter eines Luft/Ölgemischs einer Turbomaschine, wobei dieser Rotor umfasst:
- eine Hohlwelle (114), die sich entlang einer Achse (X) erstreckt und einen inneren Hohlraum zur Zirkulation von Luft nach Trennung von dem Gemisch definiert,
- ein Ritzel (115) zur Versetzung der Hohlwelle (114) in Drehung, wobei dieses Ritzel (115) sich um die Achse (X) erstreckt und einstückig und aus einem ersten Material mit mindestens einem ersten Teil (114a) der Hohlwelle (114) gebildet ist, und
- eine ringförmige Struktur (117), vorzugsweise gitterartig, die sich um die Achse (X) erstreckt und drehfest mit der Welle (114) ist, wobei diese Struktur (117) aus einem zweiten Material hergestellt ist, das sich vom ersten Material unterscheidet, und konfiguriert ist, um eine Zentrifugaltrennung des Gemischs zu gewährleisten,
**dadurch gekennzeichnet, dass** die Struktur (117) durch die additive Fertigung dieser Struktur direkt auf mindestens einer ringförmigen Oberfläche (122) des Ritzels (115), die mindestens eine ringförmige Stützfläche für diese additive Fertigung bildet, fest mit der Welle (114) verbunden wird.

2. Rotor (121) nach Anspruch 1, wobei das Ritzel (115) an einem Längsende des ersten Teils (114a) der Welle (114) gelegen ist und die mindestens eine ringförmige Oberfläche (122) auf einer Seite des Ritzels (115) gegenüber diesem ersten Teil (114a) gelegen ist.

3. Rotor (121) nach Anspruch 1 oder 2, wobei die mindestens eine ringförmige Oberfläche (122) senkrecht zur Achse (X) ist.

4. Rotor (121) nach einem der vorstehenden Ansprüche, wobei die Struktur (117) durch additive Fertigung auf einer einzigen ringförmigen Oberfläche (122) des Ritzels (115) hergestellt ist, wobei diese Struktur (122) eben ist und sich ausgehend vom Innenumfang des Ritzels (115) bis zum Außenumfang des Ritzels (115) erstreckt.

5. Rotor (121) nach einem der vorstehenden Ansprüche, wobei das Ritzel (115) einen Außenumfang aufweist, der eine Verzahnung (123) umfasst, einen Innenumfang, der mit der Welle (114) verbunden ist, und eine mittlere ringförmige Schale (116), die sich zwischen seinem Innen- und Außenumfang erstreckt und, gemessen entlang der Achse (X), eine Dichte (E1) aufweist, die kleiner ist als die Dichten (E2, E3) der Umfänge, gemessen entlang derselben Achse (X).

6. Rotor (121) nach einem der vorstehenden Ansprüche, wobei die ringförmige Struktur (117) einstückig und aus dem zweiten Material mit mindestens einem zweiten Teil (114b) der Welle (114) hergestellt ist.

7. Rotor (121) nach einem der vorstehenden Ansprüche, wobei das erste Material aus einem durch Wärmebehandlung mit Einsatzhärtung oder Nitrierung härtbaren Stahl, beispielsweise vom Typ E16NCD13 und E32CDV13, ausgewählt ist.

8. Rotor (121) nach einem der vorstehenden Ansprüche, wobei das zweite Material ein Edelstahl ist, beispielsweise vom Typ 17-4 PH.

9. Zentrifugalentlüfter eines Luft/Ölgemischs einer Turbomaschine, umfassend einen Rotor (121) nach einem der vorstehenden Ansprüche.

10. Verfahren zur Fertigung eines Rotors nach einem der Ansprüche 1 bis 8, **dadurch gekennzeichnet, dass** es die folgenden Schritte umfasst:
a) Fertigung, aus einem einzigen Stück und einem ersten Material, des Ritzels (115) und mindestens eines Teils (114a) der Hohlwelle (114),
b) additive Fertigung, beispielsweise auf Pulverbetten, der ringförmigen Struktur (117) aus einem zweiten Material direkt auf mindestens einer ringförmigen Oberfläche (122) des Ritzels (115).

11. Verfahren nach dem vorstehenden Anspruch, wobei das Ritzel (115) an einem Längsende des ersten Teils (114a) der Welle (114) gelegen ist und die mindestens eine ringförmige Oberfläche (122) auf einer Seite des Ritzels (115) gegenüber diesem ersten Teil (114a) gelegen ist.

12. Verfahren nach Anspruch 10 oder 11, wobei das Ritzel (115) einen Außenumfang aufweist, der eine Verzahnung (123) umfasst, einen Innenumfang, der mit der Welle (114) verbunden ist, und eine mittlere ringförmige Schale (116), die sich zwischen seinem Innen- und Außenumfang erstreckt und, gemessen entlang der Achse (X), eine Dichte (E1) aufweist, die kleiner ist als die Dichten (E2, E3) der Umfänge, gemessen entlang derselben Achse (X).

13. Verfahren nach einem der Ansprüche 10 bis 11, wobei der Schritt a) die Bearbeitung eines Blocks aus einer Metalllegierung und vorzugsweise auch die Behandlung dieses Blocks nach der Bearbeitung durch Einsatzhärtung oder Nitrierung umfasst.

14. Verfahren nach einem der Ansprüche 10 bis 13, wobei der Schritt b) die gleichzeitige Fertigung der ringförmigen Struktur (117) und eines zweiten Teils (114b) der Welle (114) umfasst.

15. Verfahren nach dem vorstehenden Anspruch, wobei der zweite Teil (114b) auf dem Innenumfang der Struktur (117) gelegen ist und sich zur Oberseite des Ritzels (115) ausgehend von dessen Oberfläche (122) und in der Verlängerung des ersten Teils (114a) der Welle (114) erstreckt.

## Claims

1. A rotor (121) for a centrifugal breather for a turbomachine air/oil mixture, this rotor comprising:
- a hollow shaft (114) extending along an axis (X) and defining an internal air circulation cavity after separation of said mixture,
- a pinion (115) for rotating the hollow shaft (114), this pinion (115) extending about the axis (X) and being formed in one piece and from a first material with at least one first portion (114a) of the hollow shaft (114), and
- an annular structure (117), preferably in the form of a lattice, extending around the axis (X) and secured in rotation to the shaft (114), this structure (117) being made of a second material different from the first material and being configured to ensure a centrifugal separation of said mixture,
**characterised in that** said structure (117) is made secured to the shaft (114) by the additive manufacture of this structure directly on at least one annular surface (122) of the pinion (115) which forms at least one annular support surface for this additive manufacture.

2. The rotor (121) according to claim 1, wherein the pinion (115) is located at a longitudinal end of said first portion (114a) of said shaft (114) and said at least one annular surface (122) is located on a side of the pinion (115) opposite to this first portion (114a).

3. The rotor (121) according to claim 1 or 2, wherein said at least one annular surface (122) is perpendicular to said axis (X).

4. The rotor (121) according to one of the preceding claims, wherein said structure (117) is produced by additive manufacturing on a single annular surface (122) of the pinion (115), this surface (122) being flat and extending from the internal periphery of the pinion (115) to the external periphery of the pinion (115).

5. The rotor (121) according to one of the preceding claims, wherein the pinion (115) has an external periphery comprising a toothing (123), an internal periphery connected to the shaft (114), and an intermediate annular web (116) extending between its internal and external peripheries and having a thickness (E1) measured along said axis (X) which is less than the thicknesses (E2, E3) of said peripheries measured along the same axis (X).

6. The rotor (121) according to any of the preceding claims, wherein the annular structure (117) is made in one piece and from said second material with at least one second portion (114b) of said shaft (114).

7. The rotor (121) according to one of the preceding claims, wherein the first material is chosen from a steel that is hardenable by thermal treatment of case-hardening or nitriding, for example of the E16NCD13 and E32CDV13 type.

8. The rotor (121) according to one of the preceding claims, wherein the second material is a stainless steel, for example of the 17-4 PH type.

9. A centrifugal breather for a turbomachine air/oil mixture, comprising a rotor (121) according to one of the preceding claims.

10. A method for manufacturing a rotor according to one of claims 1 to 8, **characterised in that** it comprises the steps of:
a) manufacturing the pinion (115) and at least one portion (114a) of the hollow shaft (114) in a single piece and from a first material,
b) additive manufacturing, for example on powder beds, of the annular structure (117) in a second material directly on at least one annular surface (122) of the pinion (115).

11. The method according to the preceding claim, wherein the pinion (115) is located at a longitudinal end of said first portion (114a) of said shaft (114) and said at least one annular surface (122) is located on a side of the pinion (115) opposite to this first portion (114a).

12. The method according to claim 10 or 11, wherein the pinion (115) has an external periphery comprising a toothing (123), an internal periphery connected to the shaft (114), and an intermediate annular web (116) extending between its internal and external peripheries and having a thickness (E1) measured along said axis (X) which is less than the thicknesses (E2, E3) of said peripheries measured along the same axis (X).

13. The method according to one of claims 10 to 11, wherein step a) comprises machining a metal alloy block, and also preferably treating this block after machining by case-hardening or nitriding.

14. The method according to any of claims 10 to 13, wherein step b) comprises simultaneously manufacturing the annular structure (117) and a second portion (114b) of said shaft (114).

15. The method according to the preceding claim, wherein the second portion (114b) is located at the internal periphery of the structure (117) and extends towards the top of the pinion (115) from its surface (122) and in the extension of the first portion (114a) of the shaft (114).
